# EUROPÄISCHE PATENTSCHRIFT

(11) **EP 1 740 873 B1**
(45) Veröffentlichungstag und Bekanntmachung des Hinweises auf die Patenterteilung: **09.04.2008**
(21) Anmeldenummer: 05736121.4
(22) Anmeldetag: 21.04.2005
(51) Int. Cl.: F16L 33/207

(54) **SCHLAUCHKUPPLUNG**
HOSE COUPLING
RACCORD POUR TUYAUX FLEXIBLES

(30) Priorität: 26.04.2004 DE 102004020474
(43) Veröffentlichungstag der Anmeldung: 10.01.2007
(73) Patentinhaber: Voswinkel KG, 58540 Meinerzhagen (DE)
(72) Erfinder: HARTMANN, Jürgen, 58339 Breckerfeld (DE); SCHMITT, Frank, 58540 Meinerzhagen (DE)
(74) Vertreter: Ludewig, Karlheinrich
(86) Internationale Anmeldenummer: PCT/EP2005/004268
(87) Internationale Veröffentlichungsnummer: WO 2005/103548

(56) Entgegenhaltungen:
- FR-A- 1 495 499
- US-A- 2 250 286
- US-A- 4 018 462
- US-A- 4 099 748
- US-A- 4 498 691
- US-A- 5 317 799
- US-A1- 2002 158 468

## Beschreibung

Die Erfindung richtet sich auf eine Schlauchkupplung der im Oberbegriff des Anspruchs 1 angegebenen Art. Diese Schlauchkupplungen werden zum Anschluss von Hydraulikleitungen an Armaturen verwendet. Im Befestigungsfall greifen dabei im Inneren der Schlauchkupplung liegende Zähne in die Drahtgewebe der Hydraulikschläuche ein.

Bei einer bekannten Schlauchkupplung dieser Art (GB 2 199 100 A) handelt es sich um eine zylinderförmige Pressfassung, in die ein zweiteiliger Einsatz eingeschoben wird. Bei der Montage der Schlauchkupplung wird in diese Baueinheiten von der einen Seite das rohrartige Kupplungselement und von der anderen Seite der zu befestigende Schlauch eingeführt. Um die Schlauchkupplung zu befestigen, wird dann von außen radialer Druck auf die Pressfassung aufgebracht, um so die im Inneren der Einsätze befindlichen Schlauchgreifvorrichtungen in den Schlauch einzupressen.

Bei einer weiteren bekannten Ausführungsform einer Schlauchkupplung (EP 0 523 835 B1) ist der Einsatz einteilig und c-förmig aufgebaut. Somit können unterschiedliche Schlauchaußendurchmesser mit nur einem Einsatz verpresst werden. Die in beiden Schriften aufgeführten Einsätze weisen in etwa dieselbe Wandstärke, wie die Pressfassungen auf, da beide zusammen den vom Hydraulikschlauch erzeugten Innendruck halten sollen. Der Nachteil dieser Art von Schlauchkupplungen ist, dass beim Verpressen durch die Komprimierung in radialer Richtung das Material in longitudinaler Richtung zu den Enden der Fassung und des Einsatzes fließt. Dadurch wandern auch die Zähne der Schlauchhaltevorrichtung im Inneren des Einsatzes. Da sich diese Zähne aber im Eingriff mit dem Drahtgeflecht des Schlauches befinden, bewegt sich auch dieser während der Verpressung. Der Schlauch wird dabei von der Anschlussseite der Schlauchkupplung weggedrückt. Es hat sich gezeigt, dass diese Bewegung des Schlauches aus der Fassung heraus die Drucksicherheit der Schlauchkupplung reduziert. So erhöht sich die Wahrscheinlichkeit einer Leckage des nicht am Schlauchanschlag anliegenden Schlauchendes. Des Weiteren führt das Wandern der Zähne zu einem Zerfasern des Drahtgeflechtes, denn es entspricht nicht mehr seiner beim Verguss eingenommenen Anordnung im Schlauch.

Das Dokument US4099748A offenbart eine herkömmliche Schlauchkupplung. Der Erfindung liegt die Aufgabe zu Grunde, eine Schlauchkupplung der im Oberbegriff des Anspruchs 1 genannten Art bereitzustellen, bei der während des Verpressvorganges die Schlauchgreifvorrichtungen nicht durch den äußeren radialen Druck in longitudinaler Richtung wandern. Dieses wird erfindungsgemäß durch die im Anspruch 1 angegebenen Maßnahmen erreicht, denen nachfolgende besondere Bedeutung zukommt.

Die erfindungsgemäße Schlauchkupplung besteht aus einem rohrartigen Kupplungselement, einer zylinderförmigen Pressfassung und einem Einsatz. Ein Ende des Kupplungselementes besteht aus einem gerippten Schlauchnippel, auf den der zu verbindende Hydraulikschlauch aufgeschoben wird. Am anderen Ende kann das Kupplungselement an einer Armatur angeschlossen werden. Zur Montage wird der Einsatz in die Pressfassung eingeschoben und beide über den Schlauchnippel geführt. Durch die Trennung des Einsatzes von der Pressfassung können beide Teile während des Verpressens unabhängig voneinander in longitudinaler Richtung fließen. Die Lösung des oben aufgeführten Problems besteht darin, dass die zu verpressende Materialmenge des Einsatzes kleiner ist als die der Pressfassung. Die durch die Komprimierung des Einsatzes hervorgerufene radiale Volumenänderung wird somit nur durch eine äußerst geringe longitudinale Längenänderung kompensiert. Hingegen kann die Pressfassung, welche wesentlich stabiler aufgebaut ist, um den inneren Druck zu halten, unabhängig von den Schlauchhaltevorrichtungen seine Länge beim Komprimieren ändern.

In einer ersten vorteilhaften Ausgestaltung der erfindungsgemäßen Schlauchkupplung weist der einteilige Einsatz eine wesentlich geringere Wandstärke als die Pressfassung auf. Dabei ist die Aufgabe des Einsatzes ausschließlich die Fixierung des Hydraulikschlauches in der Fassung, während die Pressfassung selber für die Stabilität der Schlauchkupplung sorgt.

In einer weiteren vorteilhaften Ausgestaltung der erfindungsgemäßen Schlauchkupplung ist der Einsatz nicht einteilig, sondern mehrteilig aufgebaut. Denkbar sind dabei mehrere Zylinderabschnitte, welche jeweils individuelle Schlauchhaltevorrichtungen aufweisen. Denkbar ist es auch, als Einsatz spiralförmig gebogenes Material, wie beispielsweise eine Spiralfeder, zu verwenden. Auf Grund der geringen Materialmenge würde auch hier bei der Verpressung keine nennenswerte longitudinale Längenänderung entstehen.

In einem weiteren vorteilhaften Ausführungsbeispiel der erfindungsgemäßen Schlauchkupplung könnte der Einsatz auch aus einem netzförmigen Material bestehen, dass in das Netz des Hydraulikschlauches eingepresst wird. Durch die Aussparungen in dem Drahtgeflecht, würde auch hier nur sehr wenig Material verpresst, so dass die oben genannten Nachteile nicht auftreten würden.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: eine Schnittzeichnung durch die verschiedenen Elemente der erfindungsgemäßen Schlauchkupplung,
- Fig. 2: die Anordnung der verschiedenen Elemente der erfindungsgemäßen Schlauchkupplung im Montagefall, und
- Fig. 3: die Anordnung der verschiedenen Elemente der erfindungsgemäßen Schlauchkupplung im Befestigungsfall.

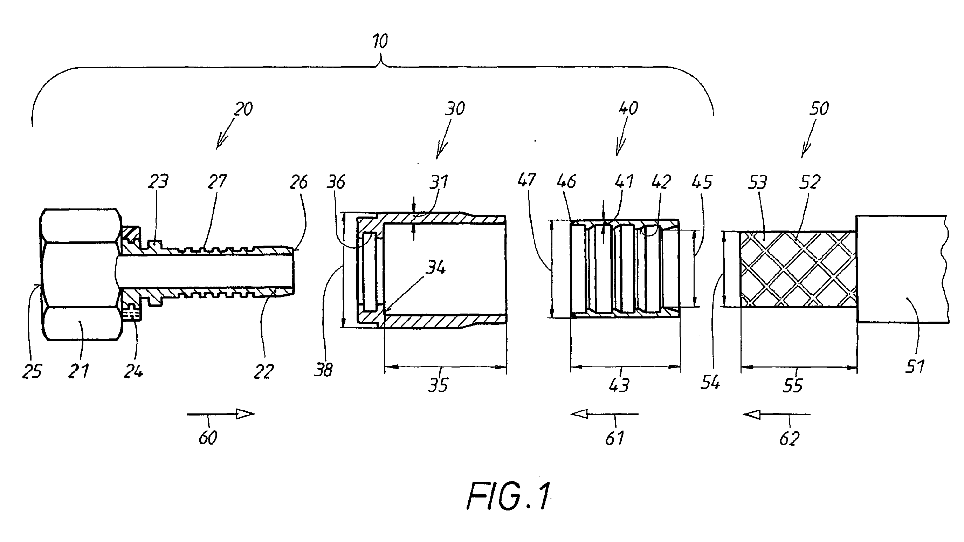

In Fig. 1 sind die Bauelemente der erfindungsgemäßen Schlauchkupplung 10 dargestellt. Sie besteht erstens aus einem Kupplungselement 20. Dabei handelt es sich um eine rohrförmige Baugruppe, die an ihrem hinteren Ende 26 einen gerippten Schlauchnippel 22 aufweist, auf den der Hydraulikschlauch 50 aufgeschoben werden kann. Um den Schlauchnippel 22 im Innenschlauch 53 des Hydraulikschlauches 50 zu fixieren, weist der Nippel 22 Rippen 27 auf. Dabei handelt es sich um trapezförmige radial umlaufende Rippen, die bei passendem Innendurchmesser des Schlauches das Kupplungselement halten. Im Inneren ist der Schlauchnippel hohl, um die Hydraulikflüssigkeit oder sonstige Flüssigkeiten, welche durch den angeschlossenen Schlauch fließen weiterzuleiten. Am vorderen Ende 25 des Kupplungselementes ist eine Anschlussmutter angebracht. Mit ihr kann das Kupplungselement 20 an eine nicht gezeigte Armatur angeschlossen werden. Beispielhaft ist hier ein Außensechskant 21 gezeigt, welcher im Inneren über ein Innengewinde verfügt. Im hier dargestellten Fall ist das Kupplungselement zweiteilig aufgebaut. Bei der Montage wird die Aufsteckmutter 21 vom hinteren Ende 26 über den Schlauchnippel auf den vorderen Teil des Kupplungselementes geführt. Die Aufsteckmutter 21 wird dann durch einen als Aufsteckteil ausgebildeten Anschlagflansch 24 gesichert.

Das nächste Bauelement, aus dem die erfindungsgemäße Schlauchkupplung 10 aufgebaut ist, ist die Pressfassung 30. Sie besteht aus einem zylinderartigen Abschnitt, mit einem zylinderförmigen Innenhohlraum. Die äußere Kontur der Pressfassung 30 kann vom jeweiligen Einsatzgebiet abhängen. So ist es durchaus denkbar, einen runden Querschnitt zu wählen oder einen mehreckigen. An jenem Ende der Pressfassung 30, welches über den Schlauchnippel 22 des Kupplungselementes 20 geschoben wird, befindet sich im Inneren eine Nut 36. Sie wird im späteren Befestigungsfall über die Schulter 23 des Kupplungselementes 20 gepresst. Im Inneren der Pressfassung 30 befindet sich weiterhin eine Anschlagkante 34, an der sowohl der noch zu beschreibende Einsatz 40, als auch der Schlauch 50 anschlagen. Die Wanddicke 31 der Pressfassung ist dabei so gewählt, dass sie der radial nach außen wirkenden Kraft durch die in der Leitung 50 fließende Flüssigkeit standhalten kann. Die Materialstärke 31 ist dabei wesentlich stärker, als die Materialstärke 41 des Einsatzes 40. Dieser weist eine Länge 43 auf, welche geringer ist als die Innenlänge 35 der Fassung 30. Wird der Einsatz 40 zur Montage in die Pressfassung 30 eingeschoben, ergibt sich somit ein überstehender Rand. Der Durchmesser 47 des Einsatzes 40 ist so gewählt, dass dieser formschlüssig in die Pressfassung eingeschoben werden kann. Somit ist zwar eine longitudinale Bewegung des Einsatzes 40 in der Fassung 30 möglich, aber keine radiale. Um ein leichtes Einführen des Einsatzes 40 bei der Montage zu ermöglichen, weist dieser an seinem vorderen Ende eine Anphasung 46 auf. In seinem Inneren sind Strukturierungen ausgearbeitet, welche als Schlauchgreifvorrichtungen wirken. Es kann sich dabei, wie hier angedeutet, um radial umfaufende sägezahnförmige Rippen 42 handeln. Möglich sind aber auch andere Strukturen und Geometrien, wie etwa dreiecksartige Rippen oder individuelle Haltepunkte.

Bei der Montage der Schlauchkupplung 10 auf den Schlauch 50 wird dieser im allgemeinen an einem Ende geschält. Dabei wird das Obergummi 51 des Schlauches 50 bis auf das Drahtgeflecht 52 entfernt. Es darf dabei nicht beschädigt werden, da es dem Innenschlauch 53 die Druckfestigkeit verleiht. Der Durchmesser 54 des geschälten Schlauches ist dabei so zu wählen, dass er kleiner oder übereinstimmend mit dem Innendurchmesser 45 des Einsatzes ist. Gleiches gilt für die Länge 55 des zu schälenden Bereiches.

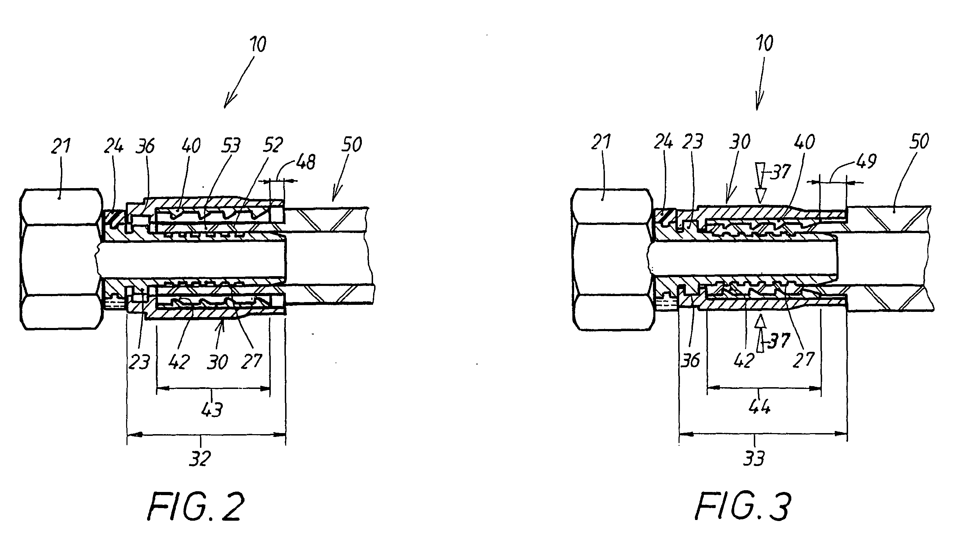

Zur Montage der erfindungsgemäßen Schlauchkupplung 10 wird zunächst der Einsatz 40 in Richtung des Bewegungspfeils 61 in die Pressfassung 30 eingeführt. Dabei sollte die Anphasung 46 an der Anschlagkante 34 zum Liegen kommen. Anschließend wird das Kupplungselement 20 in Richtung des Bewegungspfeils 60 in die Fassung eingeführt. Dieses geschieht so lange, bis der Anschlagflansch 24 in Kontakt ist mit der Pressfassung 30. Als letzter Schritt wird dann der geschälte Abschnitt 55 des Schlauches 50 in Richtung des Bewegungspfeils 62 in die Schlauchkupplung 10 eingeschoben. Die sich im Montagefall ergebende Anordnung der einzelnen Elemente zueinander ist in Fig. 2 dargestellt. In dem dort dargestellten Montagefall sind sämtliche Elemente der Schlauchkupplung 10 und der Schlauch 50 ineinander geschoben, aber noch nicht miteinander verpresst. So greifen die Schlauchgreifvorrichtungen 42 noch nicht in den Schlauch 50 ein. Des Weiteren liegt der Innenschlauch 53 nur formschlüssig auf den Rippeln 24 des Schlauchnippels 23 auf.

Um die Schlauchkupplung 10 abzugssicher auf den Hydraulikschlauch zu montieren, bedarf es eines äußeren radialen Druckes, der durch die in Fig. 3 eingezeichneten Druckpfeile 37 verdeutlicht werden soll. Dieser auf die Pressfassung 30 wirkende äußere Druck 37 führt zu einer Komprimierung sowohl der Pressfassung als auch des Einsatzes. Dadurch werden die Schlauchgreifvorrichtungen 42 in das Drahtgewebe 52 des Schlauches 50 eingepresst und führen zu einer festen Verbindung zwischen Schlauchkupplung 10 und Schlauch 50. In Fig. 3 ist dieser als Befestigungsfall bezeichnete Zustand nach dem Verpressen der Fassung 30 und des Einsatzes 40 auf den Schlauch 50 dargestellt. Die zahnförmige Strukturierung 42 des Einsatzes 40, welche als Schlauchgreifvorrichtung wirkt, ist in das Drahtgeflecht 52 des Schlauches eingedrückt. Der Einsatz 40 und die Fassung 30 sind nach dem Verpressen kraft- und formschlüssig verbunden.

Beim radialen Zusammendrücken der Pressfassung wird deren Durchmesser verkleinert. Da die Hülse nur begrenzt weit zusammengepresst werden kann, führt diese radiale Kompression zu einem Fließen des Materials in longitudinaler Richtung. Das Material des Körpers weicht dem äußeren Druck durch Verlängerung aus. Beim Verpressen von Schlauchkupplungen nach dem Stand der Technik führt diese Längung der Pressfassungen dazu, dass der anzuschließende Schlauch nicht mehr ideal in der Schlauchkupplung liegt. Insbesondere das Schlauchende befindet sich häufig nicht mehr an der dafür vorgesehenen Anschlagkante. Des Weiteren wandern die Strukturierungen der Schlauchhaltevorrichtungen in den Drahtgeflechten. Um dieses zu verhindern, ist die erfindungsgemäße Schlauchkupplung mit einem Einsatz 40 bestückt, der beim Übergang vom Montagefall in den Befestigungsfall eine geringere Längenänderung besitzt als die Fassung. Wie Fig. 2 verdeutlicht, ist die Länge 43 des Einsatzes 40 geringer, als die des sie aufnehmenden Innenlagers der Pressfassung 30. Somit entsteht bei vollständig eingeschobenen Einsatz ein Randbereich mit einer Länge 48. Wird nun die Schlauchkupplung durch einen äußeren Druck 37 verpresst, so führt dieses zu einer Längung der Pressfassung 30. Durch die Reduzierung des Außendurchmessers vergrößert sich die Länge der Pressfassung von der Montagelänge 32 auf die Befestigungslänge 33. Der Druck 37 führt ebenfalls zu einer Komprimierung des Einsatzes 30. Da dieser aber eine wesentlich geringere Wandstärke 31 als die Pressfassung aufweist, ist die Längenänderung sehr viel geringer. Im Idealfall stimmen die Länge des Einsatzes im Montagefall 43 mit dem im Befestigungsfall 44 überein. Wie Fig. 3 verdeutlicht, ergibt sich als Ergebnis der Verpressung eine gesteigerte Längendifferenz 49 zwischen der Länge des Einsatzes 44 und der Innenlänge 35 der Pressfassung.

Da die Pressfassung 30 und der Einsatz 40 zwei getrennte Bauelemente sind, können sie sich unabhängig voneinander in longitudinaler Richtung ausdehnen. Somit beeinflusst die Längenänderung der Pressfassung 30 beim Verpressen nicht die Position bzw. Länge des Einsatzes 40. Der Schlauch 50 verbleibt während des Pressvorganges in der dafür vorgesehenen Position. Das Risiko, dass das Schlauchende nicht mehr an dem Anschlagflansch 34 liegt, und somit eine Leckage entstehen könnte, wird deutlich verringert. Des Weiteren wandern die Schlauchhaltevorrichtungen 42 nicht mehr in dem Drahtgeflecht 52, so dass eine erhöhte Drucksicherheit erreicht wird.

Um die erfindungsgemäße geringere Längenausdehnung des Einsatzes 40 beim Übergang von Montagefall in den Befestigungsfall zu erreichen, muss die Materialmenge des Einsatzes immer geringer sein, als die der Fassung. Dieses lässt sich dadurch erreichen, dass der Einsatz sehr dünnwandig ist. Um dieses zu erreichen könnte der Einsatz 40 auf seiner Außenfläche Vertiefungen aufweisen. Gleichfalls denkbar wären Aussparungen im Einsatz. In einer weiteren Ausführungsform des erfindungsgemäßen Gegenstandes könnte der Einsatz 40 nicht einteilig aufgebaut sein, sondern aus mehreren Zylinderabschnitten bestehen. Dadurch wäre es leichter möglich die Schlauchgreifvorrichtungen individuell an das Muster des Drahtgeflechtes 52 anzupassen. Damit ergäbe sich eine verbesserte Verbindung zwischen der Schlauchkupplung und dem Schlauch.

In einer weiteren Ausführung der erfindungsgemäßen Schlauchkupplung 10 könnte es sich bei den Schlauchgreifvorrichtungen 42 auch um Stauchungsfalten des Einsatzes 40 handeln. Bei der Herstellung des Einsatzes könnte dieser zuerst aus einem zylinderförmigen Material bestehen, was entlang spezieller Stauchfalten durch äußere Einwirkung gestaucht wird, so dass im Inneren Vorsprüngen entstehen würden, die sich später in das Schlauchgewebe eindrücken. Allerdings könnte es sich auch als vorteilhaft herausstellen, nicht nur radial umlaufende Strukturierungen als Schlauchgreifvorrichtung 42 zu verwenden. Möglich wäre es einzelne in das Innere des Einsatzes hineinragende Vorsprünge zu benutzen. Dabei sind stiftartige, dornartige oder pyramidenartige Vorsprünge vorteilhaft, die sich beim Verpressen in das Gewebemuster einbohren.

In einer weiteren Ausgestaltung der erfindungsgemäßen Schlauchkupplung 10 könnte es sich bei dem Einsatz 30 auch um ein spiralförmig gebogenes Material, wie beispielhaft eine Spiralfeder, handeln. Da hier nur eine sehr geringe Materialmenge verpresst würde, ergäbe sich ebenfalls keine signifikante Längenänderung. Die Spiralfeder müsste dabei einen Außendurchmesser aufweisen, der entsprechend jenem Innendurchmesser der Pressfassung 30 ist. Somit wäre ein formschlüssiges Einführen der Spiralfeder in die Pressfassung möglich. Um ein besseres Verbinden des spiralförmig geformten Materiales mit dem Drahtgeflecht 52 des Schlauches 50 zu erreichen, könnte dieses einen rautenförmigen Querschnitt aufweisen. Je nach Anwendungszweck könnte es aber auch vorteilhaft sein, einen runden, rechteckigen oder dreiecksartigen Querschnitt des Materials für den Einsatz zu wählen.

Zur Kostenreduzierung bei der Herstellung könnten sowohl Pressfassung 30 als auch Einsatz 40 aus Automatenstahl hergestellt werden. Da die Längenänderung des Einsatzes 40 beim Verpressen nur noch gering bis vernachlässigbar ist, müsste dieser vor der Verwendung nicht mehr spannungsfrei geglüht werden. Bei mehrteilig aufgebauten Schlauchkupplungen nach dem Stand der Technik ist dieses nicht möglich, da die durch das Verpressen entstehenden Spannungen innerhalb des Einsatzes so groß sind, dass Risse entstehen. Auf Grund der erfindungsgemäßen geringen Längenänderung des Einsatzes, kann auf das kostenintensive Glühen bei der hier offenbarten Schlauchkupplung verzichtet werden.

### Bezugszeichenliste:

- 10: Schlauchkupplung
- 20: Kupplungselement
- 21: Außensechskant
- 22: Schlauchnippel
- 23: Schulter an 20
- 24: Anschlagflansch an 20
- 25: Vorderes Ende von 20
- 26: Hinteres Ende von 20
- 27: Rippel auf 20
- 30: Pressfassung
- 31: Wanddicke von 30
- 32: Länge von 30 im Montagefall
- 33: Länge von 30 nach der Verpressung
- 34: Schlauchanschlag
- 35: Innenlänge von 30
- 36: Nut
- 37: Äußerer Druck
- 38: Durchmesser von 30
- 40: Einsatz
- 41: Wanddicke von 40
- 42: Strukturierung, Rippen von 40
- 43: Länge des Einsatzes 40 im Montagefall
- 44: Länge des Einsatzes 40 nach der Verpressung
- 45: Innendurchmesser von 40
- 46: Anphasung von 40
- 47: Durchmesser von 40
- 48: Längendifferenz 35 zu 43 im Montagefall
- 49: Längendifferenz 35 zu 44 im Befestigungsfall
- 50: Schlauch
- 51: Obergummi
- 52: Drahtgeflecht
- 53: Innenschlauch
- 54: Durchmesser des geschälten Schlauchabschnittes
- 55: Schällänge
- 60: Bewegung von 20 in 30
- 61: Bewegung von 40 in 30
- 62: Bewegung von 50 auf 22 bzw. von 50 in 40

## Patentansprüche

1. Schlauchkupplung (10) für einen Schlauch (50), insbesondere für Hochdruck-Hydraulikleitungen,
welche ein rohrartiges Kupplungselement (20), eine zylindrische Pressfassung (30) und einen Einsatz (40) umfasst,
wobei das Kupplungselement (20) an einem Ende (25) an eine Armatur anschließbar ist und am anderen Ende (26) einen Schlauchnippel (22) für einen Schlauch (50) aufweist,
wobei die Pressfassung (30) einen durch einen Anschlag (34) nach vorn begrenzten zylindrischen Innenhohlraum für die Aufnahme des Einsatzes (40) besitzt,
wobei der Einsatz (40) in der Pressfassung (30) ruht und auf seiner Innenfläche Schlauchgreifvorrichtungen (42) besitzt,
wobei im Montagefall die Pressfassung (30) mit dem Einsatz (40) den Schlauchnippel (22) mit dem aufgeschobenen Schlauch (50) umfassen,
wobei im Befestigungsfall die Schlauchgreifvorrichtungen (42) des Einsatzes (40) den Schlauch (50) halten und
wobei die Schlauchkupplung (10) durch Anwendung äußeren, radialen Drucks (37) vom Montagefall in den Befestigungsfall überführbar ist,
**dadurch gekennzeichnet,**
**dass** die Längenänderung (49) des Einsatzes (40) beim Übergang vom Montagefall in den Befestigungsfall geringer ist als jene der Fassung (30),
**dass** die Wandstärke (41) des Einsatzes (40) geringer ist als die Wandstärke (31) der Fassung (30) und/ oder die Materialmenge aus der der Einsatz (40) besteht geringer ist als jene der Fassung (30),
**dass** die Innenlänge (35) der Pressfassung (30) länger ist als die Gesamtlänge (43) des Einsatzes (40),
**dass** im Montagefall sowie im Befestigungsfall die Stirnseiten des Einsatzes (40) und des Schlauches (50) an dem Anschlag (34), der den zylinderförmigen Innenhohlraum der Pressfassung (30) nach vorn begrenzt, anliegen.

2. Schlauchkupplung nach Anspruch 1, **dadurch gekennzeichnet, dass** der Einsatz (40) einteilig und zylinderförmig ist.

3. Schlauchkupplung nach Anspruch 1, **dadurch gekennzeichnet, dass** der Einsatz (40) aus mehreren Zylinderabschnitten besteht.

4. Schlauchkupplung nach einem der Ansprüche 1 bis 3, **dadurch gekennzeichnet, dass** der Einsatz (40) aus einem spiralförmig geformten Material aufgebaut ist.

5. Schlauchkupplung nach Anspruch 4, **dadurch gekennzeichnet, dass** der Einsatz (40) eine Spiralfeder ist.

6. Schlauchkupplung nach einem der Ansprüche 1 bis 5, **dadurch gekennzeichnet, dass** der Einsatz (40) ein Gitternetz ist.

7. Schlauchkupplung nach einem der Ansprüche 1 bis 3, **dadurch gekennzeichnet, dass** die Schlauchgreifvorrichtungen (42) aus im Inneren des bzw. der Einsätze (40) umlaufenden Rippen bestehen.

8. Schlauchkupplung nach Anspruch 7, **dadurch gekennzeichnet, dass** die Rippen im Querschnitt dreiecksartig sind.

9. Schlauchkupplung nach Anspruch 7, **dadurch gekennzeichnet, dass** die Rippen im Querschnitt sägezahnartig sind.

10. Schlauchkupplung nach einem der Ansprüche 1 bis 3, **dadurch gekennzeichnet, dass** die Schlauchgreifvorrichtungen (42) aus in das Innere des Einsatzes (40) hineinragenden einzelnen Vorsprüngen aufgebaut sind.

11. Schlauchkupplung nach einem der Ansprüche 1 bis 3, **dadurch gekennzeichnet**, die Schlauchgreifvorrichtungen (42) Stauchungsfalten des Einsatzes (40) sind.

12. Schlauchkupplung nach einem der Ansprüche 1 bis 11, **dadurch gekennzeichnet, dass** die Strukturen der Schlauchgreifvorrichtungen (42) an das Webmuster des Drahtgeflechtes (52) des Schlauches (50) angepasst sind.

13. Schlauchkupplung nach einem der Ansprüche 1 bis 12, **dadurch gekennzeichnet, dass** der bzw. die Einsätze (40) einschubseitig eine Phase (46) besitzen.

14. Schlauchkupplung nach einem der Ansprüche 1 bis 13, **dadurch gekennzeichnet, dass** die Außenfläche des bzw, der Einsätze (40) Vertiefungen aufweisen.

15. Schlauchkupplung nach einem der Ansprüche 1 bis 14, **dadurch gekennzeichnet, dass** in die Außenfläche des bzw. der Einsätze (40) Aussparungen eingebracht sind.

16. Schlauchkupplung nach einem der Ansprüche 5 bis 15, **dadurch gekennzeichnet, dass** die als Einsatz fungierende Spiralfeder einen rautenförmigen Querschnitt aufweist.

17. Schlauchkupplung nach einem der Ansprüche 1 bis 16, **dadurch gekennzeichnet, dass** die Pressfassung (30) und der Einsatz (40) aus Automatenstahl bestehen.

## Claims

1. Hose coupling (10) for a hose (50), particularly for high pressure hydraulic lines,
which comprises a tubular coupling element (20), a cylindrical press-fit socket (30) and an insert (40),
the coupling element (20) being connectable at one end (25) to a fitting and comprising at the other end (26) a hose nipple (22) for a hose (50),
the press-fit socket (30) having a cylindrical inner cavity, bounded to the front by a stop (34), for accommodating the insert (40),
the insert (40) resting in the press-fit socket (30) and having hose gripping means (42) on its inner surface,
while in the assembled state the press-fit socket (30) with the insert (40) surrounds the hose nipple (22) with the pushed on hose (50),
and in the secured state the hose gripping means (42) of the insert (40) secure the hose (50) and
the hose coupling (10) can be changed from the assembled state to the secured state by the application of external radial pressure (37),
**characterised in that**
the change in length (49) of the insert (40) during the transition from the assembled state into the secured state is less than that of the socket (30),
**in that** the wall thickness (41) of the insert (40) is less than the wall thickness (31) of the socket (30) and/or the quantity of material that makes up the insert (40) is less than that of the socket (30),
**in that** the internal length (35) of the press-fit socket (30) is longer than the overall length (43) of the insert (40),
**in that** in the assembled state as well as in the secured state the end faces of the insert (40) and of the hose (50) abut on the stop (34) which bounds the cylindrical inner cavity of the press-fit socket (30) to the front.

2. Hose coupling according to claim 1, **characterised in that** the insert (40) is in one piece and cylindrical in shape.

3. Hose coupling according to claim 1, **characterised in that** the insert (40) consists of a plurality of cylinder sections.

4. Hose coupling according to one of claims 1 to 3, **characterised in that** the insert (40) is made of a helically shaped material.

5. Hose coupling according to claim 4, **characterised in that** the insert (40) is a helical spring.

6. Hose coupling according to one of claims 1 to 5, **characterised in that** the insert (40) is a mesh net.

7. Hose coupling according to one of claims 1 to 3, **characterised in that** the hose gripping means (42) consist of ribs extending around the interior of the insert or inserts (40).

8. Hose coupling according to claim 7, **characterised in that** the ribs are triangular in cross-section.

9. Hose coupling according to claim 7, **characterised in that** the ribs are sawtooth-shaped in cross-section.

10. Hose coupling according to one of claims 1 to 3, **characterised in that** the hose gripping means (42) are made up of individual projections protruding into the interior of the insert (40).

11. Hose coupling according to one of claims 1 to 3, **characterised in that** the hose gripping means (42) are buckling folds formed in the insert (40).

12. Hose coupling according to one of claims 1 to 11, **characterised in that** the structures of the hose gripping means (42) are adapted to the weave pattern of the wire mesh (52) of the hose (50).

13. Hose coupling according to one of claims 1 to 12, **characterised in that** the insert or inserts (40) have a chamfer (46) at the push-in end.

14. Hose coupling according to one of claims 1 to 13, **characterised in that** the outer surfaces of the insert or inserts (40) have depressions.

15. Hose coupling according to one of claims 1 to 14, **characterised in that** recesses are formed in the outer surface of the insert or inserts (40).

16. Hose coupling according to one of claims 5 to 15, **characterised in that** the helical spring acting as an insert has a rhombic cross-section.

17. Hose coupling according to one of claims 1 to 16, **characterised in that** the press-fit socket (30) and the insert (40) are made of machining steel.

## Revendications

1. Raccord (10) pour tuyau flexible (50), notamment pour conduites hydrauliques haute pression,
comprenant un élément raccord (20) de type tubulaire, une douille sertie cylindrique (30) et un insert (40),
sachant que l'élément raccord (20) est raccordable par une extrémité (25) à une robinetterie et par l'autre extrémité (26) à un nipple (22) auquel raccorder un flexible (50),
que la douille sertie (30) présente une cavité intérieure cylindrique limitée à l'avant par une butée (34) et servant à recevoir l'insert (40),
que l'insert (40) repose dans la douille sertie (30) et possède sur sa surface intérieure des dispositifs (42) saisissant le flexible,
qu'en situation de montage la douille sertie (30) et l'insert (40) enserrent le nipple (22) avec le flexible enfilé (50),
qu'en situation de fixation les dispositifs (42) de l'insert (40) destinés à saisir le flexible (50) retiennent ce dernier et
que le raccord (10) pour tuyau flexible est transférable de la situation de montage vers la situation de fixation par application d'une pression externe radiale (37),
**caractérisé en ce que**
la modification de longueur (49) de l'insert (40) au passage de la situation de montage vers celle de fixation est plus faible que celle de la douille (30),
l'épaisseur de paroi (41) de l'insert (40) est inférieure à l'épaisseur de paroi (31) de la douille (30) et/ou que la quantité de matière composant l'insert (40) est inférieure à la quantité de matière composant la douille (30),
la longueur intérieure (35) de la douille sertie (30) est supérieure à la longueur totale (43) de l'insert (40),
en situation de montage et en situation de fixation, les faces frontales de l'insert (40) et du flexible (50) appliquent contre la butée (34) limitant vers l'avant la cavité intérieure cylindrique de la douille sertie (30).

2. Raccord pour tuyau flexible selon la revendication 1, **caractérisé en ce que** l'insert (40) est monobloc et cylindrique.

3. Raccord pour tuyau flexible selon la revendication 1, **caractérisé en ce que** l'insert (40) se compose de plusieurs segments cylindriques.

4. Raccord pour flexible selon l'une des revendications 1 à 3, **caractérisé en ce que** l'insert (40) se compose d'un matériau de forme hélicoïdale.

5. Raccord pour flexible selon la revendication 4, **caractérisé en ce que** l'insert (40) st un ressort hélicoïdal.

6. Raccord pour flexible selon l'une des revendications 1 à 5, **caractérisé en ce que** l'insert (40) est une armature en treillis.

7. Raccord pour flexible selon l'une des revendications 1 à 3, **caractérisé en ce que** les dispositifs (42) saisissant le flexible se composent de nervures circonférentielles à l'intérieur du ou des inserts (40).

8. Raccord pour flexible selon la revendication 7, **caractérisé en ce que** les nervures présentent une section triangulaire.

9. Raccord pour flexible selon la revendication 7, **caractérisé en ce que** les nervures présentent une section en dents de scie.

10. Raccord pour flexible selon l'une des revendications 1 à 3, **caractérisé en ce que** les dispositifs (42) saisissant le flexible sont construits à partir de protubérances individuelles faisant saillie à l'intérieur de l'insert (40).

11. Raccord pour flexible selon l'une des revendications 1 à 3, **caractérisé en ce que** les dispositifs (42) saisissant le flexible sont des plis de l'insert (40) obtenus par refoulement.

12. Raccord pour flexible selon l'une des revendications 1 à 11, **caractérisé en ce que** les structures des dispositifs (42) saisissant le flexible sont adaptées au schéma de tissage du treillis filaire (52) équipant le flexible (50).

13. Raccord pour flexible selon l'une des revendications 1 à 12, **caractérisé en ce que** le ou les inserts (40) présentent un biseau (46) côté enfoncement.

14. Raccord pour flexible selon l'une des revendications 1 à 13, **caractérisé en ce que** les surfaces extérieures du ou des inserts (40) présentent des creux.

15. Raccord pour flexible selon l'une des revendications 1 à 14, **caractérisé en ce que** des évidements ont été ménagés dans la surface extérieure du ou des inserts (40).

16. Raccord pour flexible selon l'une des revendications 5 à 15, **caractérisé en ce que** le ressort hélicoïdal officiant d'insert présente une section losangée.

17. Raccord pour flexible selon l'une des revendications 1 à 16, **caractérisé en ce que** la douille sertie (30) et l'insert (40) sont en acier de décolletage.
